# DEMANDE DE BREVET EUROPEEN

(11) **EP 3 220 195 A1**
(43) Date de publication de la demande: **20.09.2017**
(21) Numéro de dépôt: 17159878.2
(22) Date de dépôt: 08.03.2017
(51) Int. Cl.: G03B 17/56, G02B 7/00

(54) **PORTE-FILTRE**

(30) Priorité: 15.03.2016 FR 1652164
(71) Demandeur: TPL Vision, 44 118 La Chevroliere (FR)
(72) Inventeur: MAZEAUD, Guillaume, GLENCARSE PH2 7LF (GB)
(74) Mandataire: Nony

(57) **Abrégé**

Porte-filtre (10) présentant une forme générale tubulaire et constitué en un matériau élastique, une gorge annulaire (40) étant ménagée sur la surface intérieure du porte-filtre.

## Description

### Domaine technique

L'invention concerne un porte-filtre adaptable à différents objectifs.

### Etat de la technique

Il est classique de disposer des filtres à l'extrémité libre des objectifs des appareils photos ou des caméras. Ces filtres sont classiquement vissés sur cette extrémité libre de l'objectif. Il est donc nécessaire de disposer d'un filtre pour chaque diamètre d'objectif.

Par ailleurs, lorsqu'un objectif est soumis à des vibrations récurrentes, par exemple parce qu'il est disposé dans un environnement industriel, les différentes pièces qui le constituent tendent à se désolidariser. En particulier, l'objectif comporte classiquement des vis qui tendent à se dévisser. Enfin, les bagues de réglage de l'objectif tendent à tourner, ce qui nuit à la qualité de l'image.

Un but de l'invention est de résoudre, au moins partiellement, ces problèmes.

### Résumé de l'invention

Selon l'invention, on atteint ce but au moyen d'un porte-filtre présentant une forme générale tubulaire et constitué en un matériau élastique, une gorge annulaire étant ménagée sur la surface intérieure du porte-filtre.

Comme on le verra plus en détail dans la suite de la description, l'élasticité du porte-filtre lui permet d'être fixé, de manière amovible, sur des objectifs présentant des diamètres différents. En outre, le porte-filtre peut être monté sur un objectif de manière que la gorge s'étende au-delà de l'extrémité libre de l'objectif. Un filtre peut donc être disposé dans la gorge. L'élasticité du matériau permet également de maintenir en position le filtre. Enfin, l'élasticité du matériau permet à la gorge de recevoir des filtres de diamètres différents.

Un porte-filtre selon l'invention peut encore comporter une ou plusieurs des caractéristiques optionnelles suivantes :
- Un porte-filtre selon l'invention peut être réalisé en un matériau élastique choisi de manière que, depuis une position de repos, le plus petit diamètre intérieur du porte-filtre puisse être élargi de plus de 5%, de préférence plus de 7%, de préférence plus de 10%.
- La gorge annulaire du porte-filtre peut s'étendre à moins de 20 mm, de préférence à moins de 10 mm, de préférence moins de 5 mm d'une extrémité distale du porte-filtre.
- Le porte-filtre peut comporter une jupe délimitée par un amincissement annulaire, de manière à être mobile entre les positions déployée et retroussée dans lesquelles elle s'étend d'un côté ou de l'autre dudit amincissement annulaire, respectivement.
- Le porte-filtre peut comporter un soufflet autorisant un élargissement du diamètre de la gorge annulaire, de manière à pouvoir y loger un filtre, de préférence sensiblement sans déformation du porte-filtre du côté opposé à ladite gorge annulaire par rapport audit soufflet.
- La gorge annulaire peut comporter une largeur supérieure à 1 mm et inférieure à 5 mm.
- Le porte-filtre peut être constitué en un unique matériau élastique, l'élasticité dudit matériau permettant d'augmenter le diamètre au repos de la gorge annulaire de plus de 1 mm, de préférence à la main.
- Le plus petit diamètre intérieur au repos du porte-filtre peut être supérieur à 20 mm, de préférence supérieur à 25 mm et/ou inférieur à 35 mm, de préférence inférieur à 30 mm.

L'invention concerne encore un ensemble comportant un porte-filtre selon l'invention et un ou plusieurs objectifs d'appareil photo ou de caméra de diamètres différents et sur lesquels le porte-filtre peut être monté et/ou un ou plusieurs filtres pouvant être montés sur le porte-filtre.

### Brève description des figures

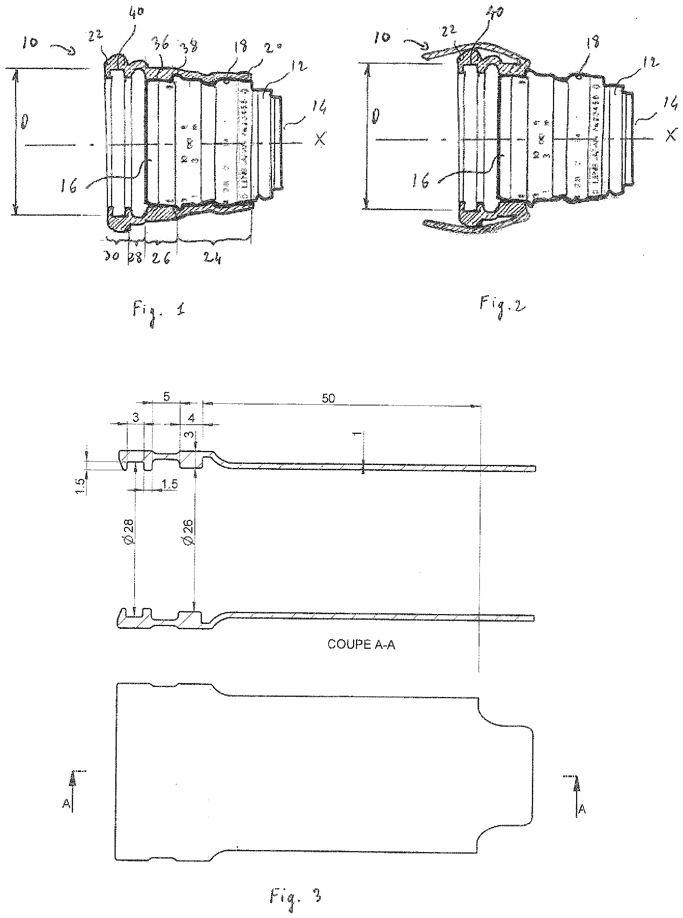

D'autres caractéristiques et avantages de l'invention apparaîtront encore à la lecture de la description détaillée qui va suivre et à l'examen du dessin annexé dans lequel les figures 1 et 2 représentent un porte-filtre selon l'invention dans une position de service où il est fixé sur un objectif, la jupe étant en position déployée et en position retroussée respectivement. Le porte-filtre est représenté en coupe longitudinale.

Pour améliorer la clarté du dessin, les contours de l'objectif ont été représentés en traits épais.

La figure 3 représente, en vue de dessus et en coupe longitudinale, un exemple de porte-filtre selon l'invention, dans un mode de réalisation préféré. Les dimensions sont en millimètres.

### Description détaillée

Sur la figure 1, un porte-filtre 10 selon l'invention est représenté monté sur un objectif 12 de forme générale cylindrique d'axe X. L'objectif 12, amovible, comporte une extrémité proximale 14 destinée à être fixée sur le corps d'un appareil photo ou d'une caméra, et une extrémité distale 16 libre qui, classiquement, porte une lentille. La fixation de l'objectif sur le corps de l'appareil photo ou de la caméra se fait classiquement au moyen d'un système à baïonnette.

Classiquement, un objectif comporte différentes pièces fixées les unes sur les autres au moyen de vis dont les têtes 18 affleurent à la surface latérale de l'objectif 12.

Le porte-filtre 10, en forme de manchon, s'étend depuis une extrémité proximale 20 jusqu'à une extrémité distale 22, selon l'axe X, sur une longueur de préférence supérieure à 30 mm, à 50 mm, à 60 mm et/ou inférieure à 150 mm, 100 mm, 80 mm. Le plus petit diamètre intérieur du manchon est de préférence supérieur à 20 mm, à 25 mm, et/ou inférieur à 40 mm, à 35 mm, à 30 mm. Il comporte, depuis l'extrémité proximale 20 jusqu'à l'extrémité distale 22, une jupe 24, fine et souple, une partie de fixation 26, plus rigide, puis, au-delà de l'extrémité distale 16 de l'objectif, un soufflet 28 annulaire et un support de filtre 30. De préférence, la longueur de la jupe 24, selon l'axe X, est supérieure à 20 mm, à 30 mm, à 40 mm, et/ou inférieure à 80 mm, à 70 mm, à 60 mm, une longueur de 50 mm étant bien adaptée.

De préférence, la partie de fixation 26 présente une épaisseur supérieure à 2 mm, de préférence supérieure à 3 mm. De préférence, elle comporte intérieurement une surface d'appui 36 annulaire qui, après assemblage sur l'objectif, comprime une surface correspondante de l'objectif de manière à maintenir fermement le porte-filtre sur objectif. De préférence, la longueur de la partie de fixation 26, selon l'axe X, est supérieure à 2 mm, supérieure à 3 mm, de préférence d'environ 4 mm.

La jupe 24 présente de préférence une épaisseur inférieure à 2 mm, de préférence inférieure à 1,5 mm. A la jonction avec la partie de fixation 26, la jupe 24 présente de préférence un amincissement 38, de préférence annulaire, servant de charnière. La jupe 24 est mobile entre des positions déployée et retroussée, représentées sur les figures 1 et 2, respectivement, dans lesquelles elle s'étend du côté proximal et du côté distal de l'amincissement 38, respectivement.

Dans la position déployée, la jupe peut avantageusement recouvrir des têtes de vis 18, et ainsi éviter tout dévissage. En outre, l'élasticité de la jupe 24 permet avantageusement de maintenir en position les autres pièces de l'objectif qu'elle recouvre, et en particulier des bagues de réglage de l'optique.

Dans la position retroussée, les têtes de vis 18 sont accessibles pour un éventuel démontage et les différentes pièces de l'optique, et notamment les bagues, peuvent être déplacées, en particulier par rotation autour de l'axe X.

Le support de filtre 30 comporte une gorge annulaire 40, de préférence d'axe X, dont le diamètre peut être élargi du fait de l'élasticité du porte-filtre.

La largeur de la gorge 40 annulaire est de préférence supérieure à 1 mm, de préférence supérieure à 2 mm et/ou inférieure à 5 mm, de préférence inférieure à 4 mm, de préférence d'environ 3 mm. Son diamètre intérieur au repos D, c'est-à-dire en l'absence de filtre, est de préférence supérieur à 25 mm, de préférence supérieur à 26 mm, de préférence supérieur à 27 mm et/ou inférieur à 35 mm, de préférence inférieur à 33 mm, de préférence inférieur à 31 mm, un diamètre au repos d'environ 28 à 30 mm étant bien adapté.

Le soufflet 28 est déformable de manière à autoriser l'insertion d'un filtre dans la gorge 40 sans décollement substantiel de la partie de fixation.

De préférence, le porte-filtre selon l'invention est constitué en un unique matériau, ce qui facilite sa fabrication. De préférence il est monobloc. De préférence, il ne comporte pas de région de soudure.

Tout matériau élastique peut être utilisé pour fabriquer un porte-filtre selon l'invention, par exemple de l'EPDM (éthylène-propylène-diène monomère).

De préférence, l'élasticité du matériau constitutif du porte-filtre permet d'augmenter, de préférence à la main, c'est-à-dire sans outil, le diamètre intérieur au repos D de la gorge 40 et/ou le diamètre intérieur au repos de la partie de fixation 26 et/ou le plus petit diamètre intérieur au repos de la jupe 24, de plus de 1 mm, de préférence de plus de 2 mm, de préférence de plus de 3 mm, de préférence de plus de 4 mm, sans déchirure.

De préférence encore, le matériau constitutif du porte-filtre est opaque.

Dans un mode de réalisation préféré, le porte-filtre porte une mention publicitaire.

Le montage d'un porte-filtre selon l'invention sur un objectif s'effectue de préférence de la manière suivante :
La jupe 24 est disposée selon la position retroussée et la partie de fixation est élargie de manière à pouvoir recevoir l'extrémité distale de objectif. Le relâchement de la tension sur la partie de fixation vient mettre en contact étroit la surface d'appui 36 sur l'objectif, ce qui maintient fermement le porte-filtre sur l'objectif.

La jupe 24 est alors déployée de manière à venir en contact étroit, du fait de l'élasticité du matériau, avec la surface extérieure de l'objectif, comme représenté sur la figure 1.

Un filtre, non représenté, peut alors être inséré dans la gorge 40.

Par "filtre", on entend un dispositif destiné à être placé devant un objectif d'un appareil photo ou d'une caméra. Un filtre peut notamment servir à modifier les longueurs d'onde des rayons incidents, mais également détourner ces rayons. Un filtre au sens de la présente invention inclut également un matériau transparent permettant de protéger l'optique de l'objectif ou de la masquer partiellement.

Plus précisément, le support de filtre 30 est déformé afin de faciliter l'insertion du filtre dans ladite gorge. La présence du soufflet 28 facilite cette déformation, toute en évitant une désolidarisation de la partie de fixation et de l'objectif. Une manoeuvre inverse permet de désolidariser le filtre, et éventuellement de le remplacer par un deuxième filtre.

Si l'objectif est soumis à des vibrations, la jupe empêche toute modification de la position angulaire des bagues de l'objectif et tout dévissage des vis qui affleurent à la surface de ce dernier.

Si le réglage de l'objectif doit être modifié, la jupe 24 peut être repositionnée en position retroussée, sans qu'il soit nécessaire de désassembler le porte-filtre ni le filtre. Le réglage peut alors être modifié, en particulier par rotation d'une ou plusieurs bagues de objectif. La jupe 24 peut ensuite être disposée à nouveau dans la position déployée.

Comme cela apparaît clairement à présent, un dispositif selon l'invention est avantageusement adaptable à plusieurs diamètres d'objectif et convient à différents diamètres de filtres. En outre, il maintient efficacement le réglage de l'objectif et évite que des vis ne se dévissent sous l'effet des vibrations. Enfin, le porte-filtre, de préférence monobloc, est facile à fabriquer et d'un coût réduit.

Bien entendu, l'invention n'est pas limitée au mode de réalisation décrit et représenté, fourni à des fins illustratives seulement.

## Revendications

1. Porte-filtre (10) présentant une forme générale tubulaire et constitué en un matériau élastique, une gorge annulaire (40) étant ménagée sur la surface intérieure du porte-filtre, le porte-filtre comportant une jupe (24) délimitée par un amincissement annulaire (38), de manière à être mobile entre des positions déployée et retroussée dans lesquelles elle s'étend d'un côté ou de l'autre dudit amincissement annulaire, respectivement.

2. Porte-filtre selon la revendication précédente, le matériau élastique étant choisi de manière que, depuis une position de repos, le plus petit diamètre intérieur du porte-filtre puisse être élargi de plus de 5%, de préférence plus de 7%, de préférence plus de 10%.

3. Porte-filtre selon l'une quelconque des revendications précédentes, dans lequel la gorge annulaire s'étend à moins de 20 mm, de préférence moins de 10 mm, de préférence moins de 5 mm d'une extrémité (22) du porte-filtre.

4. Porte-filtre selon l'une quelconque des revendications précédentes, comportant un soufflet (28) autorisant un élargissement du diamètre de la gorge annulaire, de manière à pouvoir y loger un filtre, de préférence sensiblement sans déformation du porte-filtre du côté opposé à ladite gorge annulaire par rapport audit soufflet.

5. Porte-filtre selon l'une quelconque des revendications précédentes, dans lequel la gorge annulaire comporte une largeur supérieure à 1 mm et inférieure à 5 mm.

6. Porte-filtre selon l'une quelconque des revendications précédentes, le porte-filtre étant constitué en un unique matériau élastique, l'élasticité dudit matériau permettant d'augmenter le diamètre au repos de la gorge annulaire de plus de 1 mm, de préférence à la main.

7. Porte-filtre selon l'une quelconque des revendications précédentes, dont le plus petit diamètre intérieur au repos est supérieur à 20 mm, de préférence supérieur à 25 mm et/ou inférieur à 35 mm, de préférence inférieur à 30 mm.

8. Ensemble comportant un porte-filtre selon l'une quelconque des revendications précédentes, d'une part, et plusieurs filtres de diamètres différents et conformés pour être disposés dans la gorge annulaire dudit porte-filtre et/ou plusieurs objectifs de diamètres différents et sur lesquels ledit porte-filtre peut être monté, d'autre part.
